# EUROPÄISCHE PATENTSCHRIFT

(11) **EP 2 465 185 B1**
(45) Veröffentlichungstag und Bekanntmachung des Hinweises auf die Patenterteilung: **25.12.2013**
(21) Anmeldenummer: 10744551.2
(22) Anmeldetag: 10.08.2010
(51) Int. Cl.: H02K 9/28, H02K 13/00

(54) **SCHLEIFRINGANORDNUNG FÜR EINE ROTIERENDE ELEKTRISCHE MASCHINE**
COLLECTOR RING ARRANGEMENT FOR A ROTATING ELECTRIC MACHINE
ENSEMBLE DE BAGUES COLLECTRICES POUR UNE MACHINE ÉLECTRIQUE ROTATIVE

(30) Priorität: 13.08.2009 DE 102009037052; 05.10.2009 DE 102009048265
(43) Veröffentlichungstag der Anmeldung: 20.06.2012
(73) Patentinhaber: ALSTOM Renewable Technologies, 38100 Grenoble (FR)
(72) Erfinder: SCHWERY, Alexander, CH-5024 Küttigen (CH); OKAI, Ricardo, Naoki, CH-5442 Fislisbach (CH); BAUMEISTER, Stefan, 79790 Rheinheim (DE)
(74) Vertreter: Pesce, Michele
(86) Internationale Anmeldenummer: PCT/EP2010/061569
(87) Internationale Veröffentlichungsnummer: WO 2011/018438

(56) Entgegenhaltungen:
- CH-A- 342 635
- DE-A1- 2 056 898
- DE-A1- 2 529 519
- DE-U1- 8 514 756
- US-A- 5 982 072

## Beschreibung

### TECHNISCHES GEBIET

Die vorliegende Erfindung bezieht sich auf das Gebiet der rotierenden elektrischen Maschinen. Sie betrifft eine Schleifringanordnung für eine rotierende elektrische Maschine gemäss dem Oberbegriff der Ansprüche 1 und 3.

### STAND DER TECHNIK

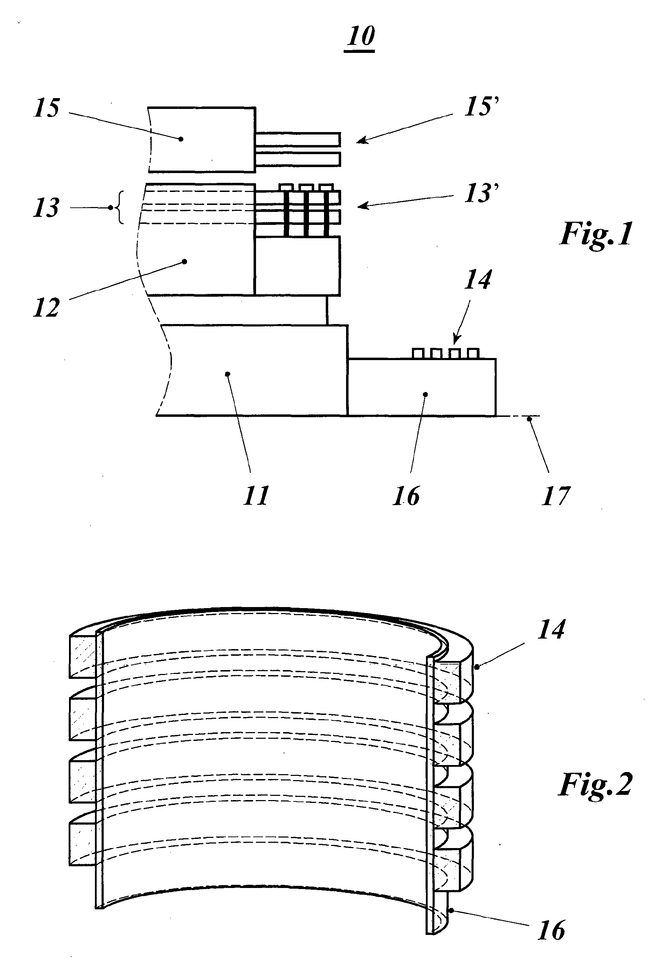

Bei rotierenden elektrischen Maschinen mit Schleifringen, wie z.B. einem Drehstrom-Asynchronmotor in Form eines Schleifringläufers, werden über die sich mit der Welle drehenden Schleifringe mittels entsprechender Bürsten Ströme übertragen. Ein Beispiel für eine derartige rotierende elektrische Maschine ist ausschnittsweise in Fig. 1 wiedergegeben. Die dort dargestellte rotierende elektrische Maschine 10 mit ihrer Maschinenachse 17 umfasst einen um die Maschinenachse 17 drehbaren Rotor mit einem Zentralkörper 11, der am Ende in eine Welle 16 übergeht. Auf dem Zentralkörper 11 sitzt ein Rotorblechkörper 12, in dem ein Rotorwicklung 13 untergebracht ist, die am Ende einen Rotorwickelkopf 13' aufweist. Der Rotor 11, 12, 13 ist konzentrisch von einem Statorblechkörper 15 umgeben, in dem eine Statorwicklung mit entsprechendem Statorwickelkopf 15' untergebracht ist. Auf der Aussenseite der Welle 16 sind mehrere (vier) Schleifringe 14 angeordnet, die der Stromübertragung zwischen Rotor und Aussenwelt dienen. Es versteht sich von selbst, dass bei der in Fig. 1 gezeigten Maschine die Verlustleistung durch spezielle Kühleinrichtungen abgeführt werden muss, die in der Figur nicht dargestellt sind.

Bei hoch belasteten Maschinen dieser Art muss der Bereich der Schleifringe hinsichtlich der Kühlung gesondert betrachtet werden. Aufgrund der hohen elektrischen wie mechanischen (Reibung) Belastung der (in Fig. 1 nicht gezeigten) Bürsten wie auch der Schleifringe 14 kommt es zu einer erhöhten Temperaturentwicklung in diesem Bereich. Da die Bürsten bei einer Abweichung von der optimalen Betriebstemperatur mit erhöhtem Verschleiss reagieren bzw. ab einer Grenztemperatur völlig zerstört werden können, ist eine entsprechende Kühlung dieser Bauteile vorzusehen.

Der konventionelle Aufbau des Schleifringbereichs sieht gemäss Fig. 2 eine durchgehende Welle 16 vor, auf der die Schleifringe 14 montiert sind. Bei diesem Aufbau ist eine Kühlung der Schleifringe 14 nur sehr bedingt möglich. Die Schleifringe 14 müssten von aussen von der Kühlluft (oder einem anderen Kühlmedium) angeströmt werden. Aufgrund der Rotation der Schleifringe 14 wird dies jedoch erschwert. Eine Kühlung von innen heraus, bei der die Luft aus dem inneren der Welle 16 radial nach aussen strömt, ist aufgrund der geschlossenen Welle 16 nicht möglich. Die Welle 16 andererseits mit entsprechend vielen Öffnungen zu versehen, ist aufgrund der mechanischen Festigkeit problematisch.

Aus der Druckschrift EP-A1-0 052 385 ist eine Schleifringanordnung für elektrische Maschinen bekannt, bei der die Schleifringe mit axialen Kühlgasbohrungen versehen sind, die von Rillen bzw. Nuten in der Schleifringoberfläche angeschnitten werden. Kühlgas tritt unter Wärmeaufnahme radial von aussen über die Rillen bzw. Nuten in die Kühlgasbohrungen ein und wird über diese mittels eines Sauglüfters abgeführt. Eine solche Kühlkonfiguration ist jedoch konstruktiv sehr aufwändig.

In der DE-A1-32 32 102 ist zur Verbesserung der Kühlung im Bereich der Schleifringanordnung vorgeschlagen worden, jeden Schleifring in eine Anzahl Einzelschleifringe aufzuteilen, die auf zur Schleifringwelle hin isolierte Zwischenschrumpfringe aufgeschrumpft sind. Auf den Zwischenschrumpfringen sind vor und hinter den Schleifringen Kühlluftventilatoren angeordnet. Auch diese Lösung erfordert einen komplizierten Aufbau und eine sehr anspruchsvolle Kühlluftführung.

Die DE 85 14 756 U1 offenbart ein Schleifringanordnung nach dem Oberbegriff der Ansprüche 1 und 3.

### DARSTELLUNG DER ERFINDUNG

Es ist daher Aufgabe der Erfindung, eine Schleifringanordnung zu schaffen, welche im Hinblick auf die Kühlung die Nachteile der bekannten Schleifringanordnungen vermeidet und sich insbesondere durch einen einfachen Aufbau und eine sehr einfache und effektive Kühlung auszeichnet, sowie ein Verfahren zum Kühlen dieser Anordnung anzugeben.

Die Aufgabe wird durch die Merkmale der Ansprüche 1 oder 3 gelöst. Wesentlich für die erfindungsgemässe Lösung ist, dass die Schleifringanordnung selbsttragend ausgebildet ist. Durch den selbsttragenden Aufbau der Schleifringanordnung kann auf eine tragende Welle in diesem Bereich verzichtet werden. Hierdurch werden einerseits die Schleifringe von allen Seiten für den Kontakt mit einem Kühlmedium gut zugänglich. Andererseits kann der Aufbau der Schleifringanordnung flexibel und mit grosser Einsparung an Gewicht erfolgen, was hinsichtlich der Lagerung der Maschinenwelle erhebliche Vorteile bringt.

Eine Ausgestaltung der erfindungsgemässen Schleifringanordnung zeichnet sich dadurch aus, dass die Schleifringe unter Ausbildung von zwischen den Schleifringen angeordneten Durchströmöffnungen für ein Kühlmedium, insbesondere Kühlluft, untereinander verbunden sind und durch zwischen den Schleifringen angeordnete Distanzmittel auf Abstand gehalten werden.

Insbesondere können die Distanzmittel Distanzringe umfassen, die über den Umfang verteilt zusätzliche Abstandselemente aufweisen.

Eine besonders günstige Führung des Kühlmediums ergibt sich dabei, wenn die zusätzlichen Abstandselemente zu beiden Seiten des jeweiligen Distanzringes in axialer Richtung abstehen, und die zusätzlichen Abstandselemente an dem jeweiligen Distanzring angeformt sind.

Es ist gemäss einer anderen Ausgestaltung der Erfindung aber auch denkbar, dass die Distanzmittel über den Umfang verteilt angeordnete Abstandselemente aufweisen.

Vorzugsweise wird dabei die Schleifringanordnung durch eine Mehrzahl von über den Umfang verteilt angeordneten, axialen Zugbolzen zusammengehalten, wobei die Zugbolzen durch die Schleifringe und die Abstandselemente hindurch geführt sind.

Besonders stabil ist die Schleifringanordnung, wenn die Schleifringe und die zwischen den Schleifringen angeordneten Abstandselemente mittels der Zugbolzen zwischen zwei als Pressflansche wirkenden Endringen zusammengepresst werden.

Eine weitere Ausgestaltung der Erfindung ist dadurch gekennzeichnet, dass die Schleifringe jeweils in eine Mehrzahl von separaten, konzentrisch und in axialer Richtung hintereinander angeordneten Teilringen unterteilt sind, welche unter Ausbildung von zwischen den Teilringen angeordneten Durchströmöffnungen für ein Kühlmedium, insbesondere Kühlluft, untereinander verbunden sind und durch zwischen den Teilringen angeordnete Distanzmittel auf Abstand gehalten werden. Hierdurch können die Schleifringe noch effektiver gekühlt werden.

Vorzugsweise umfassen die Distanzmittel für die Teilringe über den Umfang verteilt angeordnete Abstandselemente.

Eine andere Ausgestaltung der Erfindung zeichnet sich dadurch aus, dass die Schleifringanordnung einen Innenraum umschliesst, und dass im Innenraum Ableiter von den Schleifringen zum maschinenseitigen Ende der Schleifringanordnung geführt sind. Hierdurch ist es möglich, die effektive Kühlung auch auf die Ableiter auszudehnen.

Das erfindungsgemässe Verfahren zum Kühlen der Schleifringanordnung nach der Erfindung ist dadurch gekennzeichnet, dass ein Kühlmedium, insbesondere Kühlluft, in axialer Richtung in das Innere der Schleifringanordnung eingeführt wird und zwischen den Schleifringen bzw. Teilringen wieder radial nach aussen tritt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Ausschnitt eine beispielhafte rotierende elektrische Maschine mit Schleifringanordnung herkömmlicher Art;
- Fig. 2: in einer Strichdarstellung und einer flächigen Darstellung den Schnitt durch eine Schleifringanordnung herkömmlicher Art;
- Fig. 3: in einer zu Fig. 2 vergleichbaren Darstellung eine Schleifringanordnung gemäss einem ersten Ausführungsbeispiel der Erfindung;
- Fig. 4: eine Detailansicht der Schleifringanordnung aus Fig. 3;
- Fig. 5: in einer perspektivischen Seitenansicht eine Schleifringanordnung gemäss einem zweiten Ausführungsbeispiel der Erfindung;
- Fig. 6: einen Schnitt durch die Schleifringanordnung aus Fig. 5.

### WEGE ZUR AUSFÜHRUNG DER ERFINDUNG

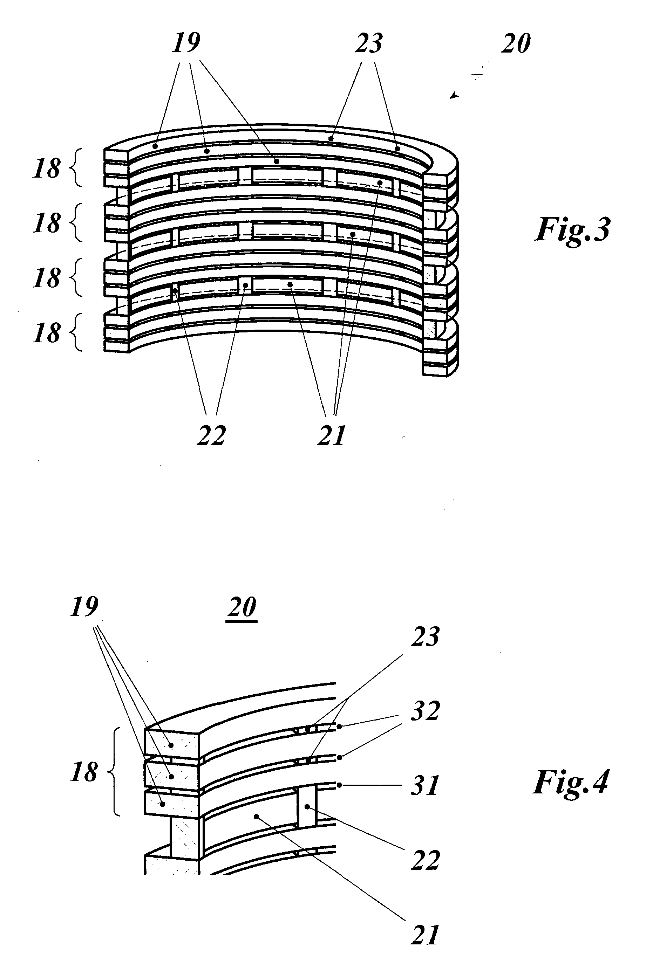

In den Fig. 3 und 4 ist in einer zu Fig. 2 vergleichbaren Darstellung eine Schleifringanordnung gemäss einem ersten Ausführungsbeispiel der Erfindung wiedergegeben. Bei dem neuen Aufbau der Schleifringanordnung 20 wird auf eine Welle als Träger der Schleifringe 18 komplett verzichtet. Die Schleifringe 18 werden konzentrisch übereinander, d.h. in Axialrichtung hintereinander, angeordnet und mittels dazwischen liegender Distanzringe 21 räumlich voneinander getrennt. Die Schleifringe 18 und die Distanzringe 21 bilden so eine selbsttragende Schleifringanordnung. An den Distanzringen 21 sind über den Umfang gleichmässig verteilt zu beiden Seiten des Distanzrings 21 abstehende Abstandselemente 22 angeformt, die dafür sorgen, dass zwischen den Distanzringen 21 und den angrenzenden Schleifringen 18 jeweils Ringspaltabschnitte entstehen, durch die ein Kühlmedium radial an den Seiten der Schleifringe 18 vorbeiströmen und Wärme aufnehmen kann.

In der Schleifringanordnung 20 gemäss Fig. 3 und 4 sind jedoch nicht nur die einzelnen Schleifringe 18 durch Distanzringe 21 voneinander getrennt, sondern auch die einzelnen Schleifringe 18 bestehen aus mehreren, durch über den Umfang gleichmässig verteilte Abstandselemente 23 voneinander getrennten Teilringen 19. Dadurch kann das Kühlmedium bzw. die Kühlluft nicht nur zwischen den Schleifringen 18 und den Distanzringen 21 ausströmen, sondern auch "durch" die Schleifringe 18 selbst, d.h. durch die von den Abstandselementen 23 gebildeten Ringspaltabschnitte zwischen den Teilringen 19, strömen. Auf diese Weise wird einerseits eine homogenere Verteilung der Kühlluft erreicht und andererseits wird die Oberfläche, über die Wärme abgegeben wird, deutlich vergrössert.

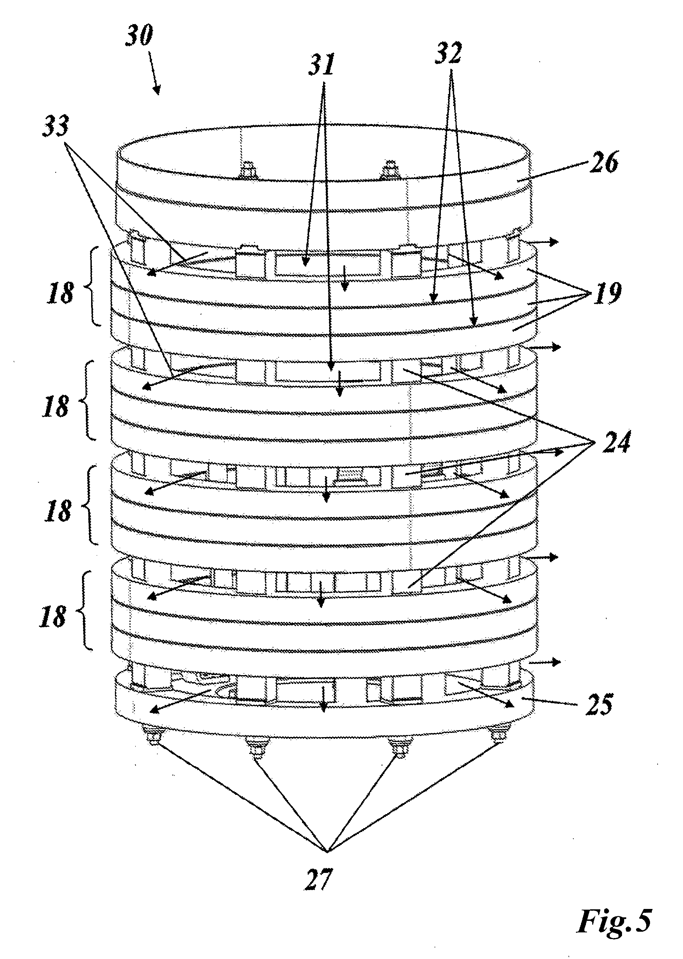

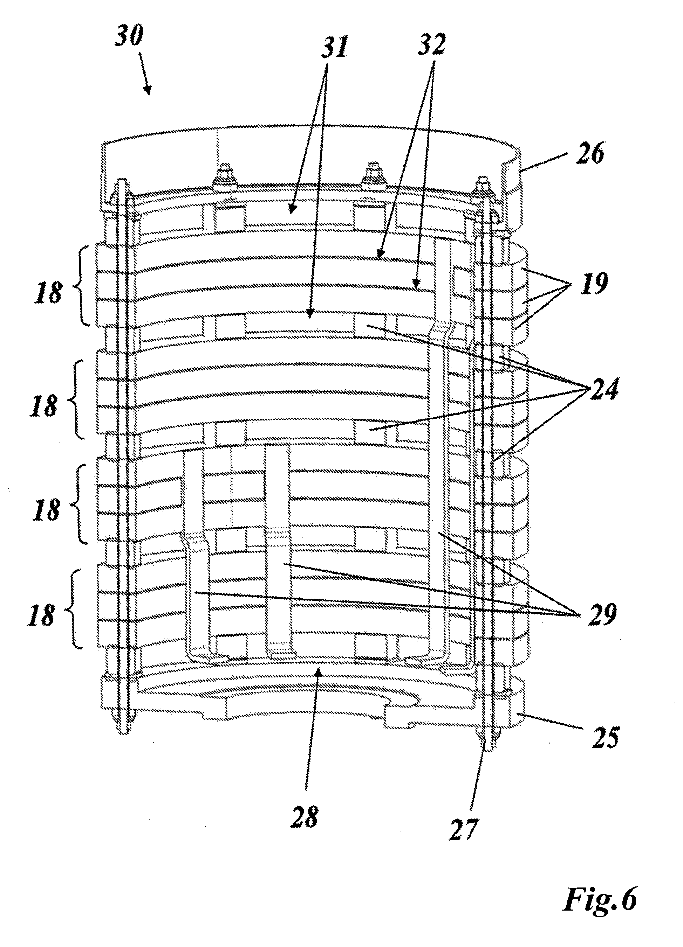

Durch die erfindungsgemässe selbsttragende Ausführung der Schleifringanordnung kann aber auch die Forderung, die Ableiter, die auf der Innenseite der Welle bzw. der Schleifringe geführt werden, zu kühlen, erfüllt werden. Dies ist an dem in Fig. 5 und Fig. 6 dargestellten Ausführungsbeispiel der Erfindung ersichtlich: Die Schleifringanordnung 30 der Fig. 5 und 6 ist ebenfalls selbsttragend aus vier Schleifringen 18 aufgebaut, die ihrerseits in jeweils drei Teilringe 19 unterteilt sind. Anstelle der Distanzringe 21 aus Fig. 3 werden hier über den Umfang verteilt blockartige Abstandselemente 24 verwendet, um die notwendigen Abstände und Durchströmöffnungen 31 zwischen den einzelnen Schleifringen 18 zu schaffen. Hierdurch wird in diesem Bereich für die Kühlluft ein grösserer Öffnungsquerschnitt erreicht.

Auch in diesem Ausführungsbeispiel sind die Teilringe 19 durch (in den Figuren nicht erkennbare) Abstandselemente voneinander beabstandet, so dass Durchströmöffnungen in Form von schmalen Ringspaltabschnitten entstehen, durch die Kühlluft strömen kann. Die selbsttragende Schleifringanordnung 30 wird durch eine Mehrzahl von über den Umfang verteilt angeordneten, axialen Zugbolzen 27 zusammengehalten, die durch die Schleifringe 18 bzw. Teilringe 19 und die Abstandselemente 24 hindurchgeführt sind. Die Schleifringe 18 bzw. Teilringe 19 und die zwischen den Schleifringen 18 angeordneten

Abstandselemente 24 werden mittels der Zugbolzen 27 zwischen zwei als Pressflansche wirkenden Endringen 25, 26 zusammengepresst und bilden so eine mechanisch stabile Einheit. Die Durchströmöffnungen 31 sind auch zwischen den äusseren Schleifringen 18 und den Endringen 25 bzw. 26 vorgesehen, um auf der Aussenseite eine ausreichende Kühlung sicherzustellen.

Die Schleifringanordnung 30 umschliesst einen Innenraum 28, in den zur Kühlung axial Kühlluft eingeführt wird, die dann durch die Durchströmöffnungen 31 und 32 radial nach aussen tritt (Kühlmedium 33 in Fig. 5). Im Innenraum 28 können mit Vorteil die mit den Schleifringen elektrisch verbundenen Ableiter 29 verlegt werden. Da die komplette Kühlluft an den Ableitern 29 vorbeiströmt, werden diese gekühlt.

Es versteht sich von selbst, dass zur elektrischen Isolierung der Schleifringe 18 die Abstandselemente 24 bzw. Distanzringe 21 isolierend ausgelegt sein müssen. Dasselbe gilt auch für die Zugbolzen 27.

Neben den verbesserten Möglichkeiten zur Kühlung lässt sich auf die beschriebene Weise auch Material einsparen, dadurch, dass keine Welle mehr erforderlich ist, welche die Schleifringe 18 trägt. Das eingesparte Material führt zu einer Kostenreduzierung and trägt dazu bei, die Lager der Maschine zu entlasten. Da die Schleifringe 18 im Regelfall nicht zwischen den Lagerstellen liegen sondern ausserhalb, sind diese eine grosse Belastung für die Lager (Taumelbewegungen). Durch eine Gewichtsreduktion in diesem Bereich können die Kräfte, die auf die Lager wirken, mit Vorteil reduziert werden.

### BEZUGSZEICHENLISTE

- 10: rotierende elektrische Maschine (z.B. Asynchronmaschine)
- 11: Zentralkörper
- 12: Rotorblechkörper
- 13: Rotorwicklung
- 13': Rotorwickelkopf
- 14,18: Schleifring
- 15: Statorblechkörper
- 15': Statorwickelkopf
- 16: Welle
- 17: Maschinenachse
- 19: Teilring
- 20,30: Schleifringanordnung
- 21: Distanzring
- 22,23,24: Abstandselement
- 25: Endring (innen)
- 26: Endring (aussen)
- 27: Zugbolzen
- 28: Innenraum
- 29: Ableiter
- 31,32: Durchströmöffnung
- 33: Kühlmedium

## Patentansprüche

1. Schleifringanordnung (20, 30) für eine rotierende elektrische Maschine, welche Schleifringanordnung (20, 30) eine Mehrzahl von konzentrisch zur Maschinenachse (17) und in axialer Richtung hintereinander angeordneter Schleifringe (18) umfasst, wobei die Schleifringanordnung (20, 30) selbsttragend ausgebildet ist,
**dadurch gekennzeichnet,**
**dass** die Schleifringe (18) unter Ausbildung von zwischen den Schleifringen (18) angeordneten Durchströmöffnungen (31) für ein Kühlmedium, insbesondere Kühlluft, untereinander verbunden sind und durch zwischen den Schleifringen (18) angeordnete Distanzmittel (21, 22; 24) auf Abstand gehalten werden, und
**dass** die Distanzmittel (21, 22; 24) Distanzringe (21) umfassen, die über den Umfang verteilt zusätzliche Abstandselemente (22) aufweisen.

2. Schleifringanordnung nach Anspruch 1, **dadurch gekennzeichnet, dass** die zusätzlichen Abstandselemente (22) zu beiden Seiten des jeweiligen Distanzringes (21) in axialer Richtung abstehen, und dass die zusätzlichen Abstandselemente (22) an den jeweiligen Distanzring (21) angeformt sind.

3. Schleifringanordnung (20, 30) für eine rotierende elektrische Maschine, welche Schleifringanordnung (20, 30) eine Mehrzahl von konzentrisch zur Maschinenachse (17) und in axialer Richtung hintereinander angeordneter Schleifringe (18) umfasst, wobei die Schleifringanordnung (20, 30) selbsttragend ausgebildet ist,
**dadurch gekennzeichnet,**
**dass** die Schleifringe (18) unter Ausbildung von zwischen den Schleifringen (18) angeordneten Durchströmöffnungen (31) für ein Kühlmedium, insbesondere Kühlluft, untereinander verbunden sind und durch zwischen den Schleifringen (18) angeordnete Distanzmittel (21, 22; 24) auf Abstand gehalten werden, und dass die Distanzmittel (21, 22; 24) über den Umfang verteilt angeordnete Abstandselemente (24) aufweisen.

4. Schleifringanordnung nach Anspruch 3, **dadurch gekennzeichnet, dass** die Schleifringanordnung (30) durch eine Mehrzahl von über den Umfang verteilt angeordneten, axialen Zugbolzen (27) zusammengehalten wird, und dass die Zugbolzen (27) durch die Schleifringe (18) und die Abstandselemente (24) hindurchgeführt sind.

5. Schleifringanordnung nach Anspruch 4, **dadurch gekennzeichnet, dass** die Schleifringe (18) und die zwischen den Schleifringen (18) angeordneten Abstandselemente (24) mittels der Zugbolzen (27) zwischen zwei als Pressflansche wirkenden Endringen (25, 26) zusammengepresst werden.

6. Schleifringanordnung nach einem der Ansprüche 1 bis 5, **dadurch gekennzeichnet, dass** die Schleifringe (18) jeweils in eine Mehrzahl von separaten, konzentrisch und in axialer Richtung hintereinander angeordneten Teilringen (19) unterteilt sind, welche unter Ausbildung von zwischen den Teilringen (19) angeordneten Durchströmöffnungen (32) für ein Kühlmedium (33), insbesondere Kühlluft, untereinander verbunden sind und durch zwischen den Teilringen (19) angeordnete Distanzmittel (23) auf Abstand gehalten werden.

7. Schleifringanordnung nach Anspruch 6, **dadurch gekennzeichnet, dass** die Distanzmittel für die Teilringe (19) über den Umfang verteilt angeordnete Abstandselemente (23) umfassen.

8. Schleifringanordnung nach einem der Ansprüche 1 bis 7, **dadurch gekennzeichnet, dass** die Schleifringanordnung (20, 30) einen Innenraum (28) umschliesst, und dass im Innenraum (28) Ableiter (29) von den Schleifringen (18) zum maschinenseitigen Ende der Schleifringanordnung (30) geführt sind.

## Claims

1. Slipring arrangement (20, 30) for a rotating electrical machine, which slipring arrangement (20, 30) comprises a plurality of sliprings (18) which are arranged concentrically with respect to the machine axis (17) and one behind the other in the axial direction, wherein the slipring arrangement (20, 30) is designed to be self-supporting, **characterized in that** the sliprings (18) are connected to one another forming through-flow openings (31), which are arranged between the sliprings (18), for a cooling medium, in particular cooling air, and are kept separated by spacers (21, 22; 24) which are arranged between the sliprings (18) **in that** the spacers (21, 22; 24) comprise spacer rings (21) which have additional spacing elements (22) distributed over the circumference.

2. Slipring arrangement according to Claim 1, **characterized in that** the additional spacing elements (22) project in the axial direction on both sides of the respective spacer ring (21), and **in that** the additional spacing elements (22) are integrally formed on the respective spacer ring (21).

3. Slipring arrangement (20, 30) for a rotating electrical machine, which slipring arrangement (20, 30) comprises a plurality of sliprings (18) which are arranged concentrically with respect to the machine axis (17) and one behind the other in the axial direction, wherein the slipring arrangement (20, 30) is designed to be self-supporting, **characterized in that** the sliprings (18) are connected to one another forming through-flow openings (31), which are arranged between the sliprings (18), for a cooling medium, in particular cooling air, and are kept separated by spacers (21, 22; 24) which are arranged between the sliprings (18) **in that** the spacers (21, 22; 24) have spacing elements (24) which are arranged distributed over the circumference.

4. Slipring arrangement according to Claim 3, **characterized in that** the slipring arrangement (30) is held together by a plurality of axial tie bolts (27) which are arranged distributed over the circumference, and **in that** the tie bolts (27) are passed through the sliprings (18) and the spacing elements (24).

5. Slipring arrangement according to Claim 4, **characterized in that** the sliprings (18) and the spacing elements (24) which are arranged between the sliprings (18) are pressed together by means of the tie bolts (27) between two end rings (25, 26) which act as pressing flanges.

6. Slipring arrangement according to one of Claims 1 to 5, **characterized in that** the sliprings (18) are each subdivided into a plurality of separate sub-rings (19) which are arranged concentrically and one behind the other in the axial direction, are connected to one another forming through-flow openings (32) which are arranged between the sub-rings (19) for a cooling medium (33), in particular cooling air, and kept separated by spacers (23) which are arranged between the sub-rings (19).

7. Slipring arrangement according to Claim 6, **characterized in that** the spacers for the sub-rings (19) comprise spacing elements (23) which are arranged distributed over the circumference.

8. Slipring arrangement according to one of Claims 1 to 7, **characterized in that** the slipring arrangement (20, 30) surrounds an internal area (28), and **in that** output conductors (29) are routed from the sliprings (18) to the machine-side end of the slipring arrangement (30) in the internal area (28).

## Revendications

1. Ensemble de bagues collectrices (20, 30) pour une machine électrique rotative, lequel ensemble de bagues collectrices (20, 30) comporte une pluralité de bagues collectrices (18) disposées de manière concentrique à l'axe de la machine (17) et les unes derrière les autres dans la direction axiale, l'ensemble de bagues collectrices (20, 30) étant réalisé de manière à être autoportant,
**caractérisé**
**en ce que** les bagues collectrices (18) sont reliées les unes aux autres en formant des ouvertures d'écoulement (31), disposées entre les bagues collectrices (18), pour un réfrigérant, en particulier pour de l'air de refroidissement, et sont maintenues à distance par des moyens d'écartement (21, 22 ; 24) disposés entre les bagues collectrices (18) et
**en ce que** les moyens d'écartement (21, 22 ; 24) comportent des bagues d'écartement (21) qui comprennent, de manière répartie sur la périphérie, des éléments d'espacement (22) supplémentaires.

2. Ensemble de bagues collectrices selon la revendication 1, **caractérisé en ce que** les éléments d'espacement (22) supplémentaires font saillie, dans la direction axiale, des deux côtés de la bague d'écartement (21) respective, et **en ce que** les éléments d'espacement (22) supplémentaires sont formés sur la bague d'écartement (21) respective.

3. Ensemble de bagues collectrices (20, 30) pour une machine électrique rotative, lequel ensemble de bagues collectrices (20, 30) comporte une pluralité de bagues collectrices (18) disposées de manière concentrique à l'axe de la machine (17) et les unes derrière les autres dans la direction axiale, l'ensemble de bagues collectrices (20, 30) étant réalisé de manière à être autoportant,
**caractérisé**
**en ce que** les bagues collectrices (18) sont reliées les unes aux autres en formant des ouvertures d'écoulement (31), disposées entre les bagues collectrices (18), pour un réfrigérant, en particulier pour de l'air de refroidissement, et sont maintenues à distance par des moyens d'écartement (21, 22 ; 24) disposés entre les bagues collectrices (18), et en ce que les moyens d'écartement (21, 22 ; 24) comprennent des éléments d'espacement (24) disposés de manière répartie sur la périphérie.

4. Ensemble de bagues collectrices selon la revendication 3, **caractérisé en ce que** l'ensemble de bagues collectrices (30) est maintenu ensemble par une pluralité de boulons de traction axiaux (27) disposés de manière répartie sur la périphérie, et **en ce que** les boulons de traction (27) sont guidés à travers les bagues collectrices (18) et les éléments d'espacement (24).

5. Ensemble de bagues collectrices selon la revendication 4, **caractérisé en ce que** les bagues collectrices (18) et les éléments d'espacement (24) disposés entre les bagues collectrices (18) sont comprimés, au moyen des boulons de traction (27), entre deux bagues d'extrémité (25, 26) agissant en tant que brides de pression.

6. Ensemble de bagues collectrices selon l'une quelconque des revendications 1 à 5, **caractérisé en ce que** les bagues collectrices (18) sont divisées respectivement en une pluralité de bagues partielles (19) séparées, concentriques et disposées les unes derrière les autres dans la direction axiale, lesquelles bagues partielles sont reliées les unes aux autres en formant des ouvertures d'écoulement (32), disposées entre les bagues partielles (19), pour un réfrigérant (33), en particulier pour de l'air de refroidissement, et sont maintenues à distance par des moyens d'écartement (23) disposés entre les bagues partielles (19).

7. Ensemble de bagues collectrices selon la revendication 6, **caractérisé en ce que** les moyens d'écartement pour les bagues partielles (19) comportent des éléments d'espacement (23) disposés de manière répartie sur la périphérie.

8. Ensemble de bagues collectrices selon l'une quelconque des revendications 1 à 7, **caractérisé en ce que** l'ensemble de bagues collectrices (20, 30) entoure un espace intérieur (28), et **en ce que** des conducteurs de sortie (29) sont guidés, dans l'espace intérieur (28), à partir des bagues collectrices (18) jusqu'à l'extrémité côté machine de l'ensemble de bagues collectrices (30).
